# EUROPÄISCHE PATENTSCHRIFT

(11) **EP 0 836 016 B1**
(45) Veröffentlichungstag und Bekanntmachung des Hinweises auf die Patenterteilung: **22.11.2000**
(21) Anmeldenummer: 97104927.5
(22) Anmeldetag: 22.03.1997
(51) Int. Cl.: F16B 43/00, B60B 3/16, F16B 43/02

(54) **Radschraube**
Screw for wheel
Vis pour roue.

(30) Priorität: 21.08.1996 DE 29614320 U
(43) Veröffentlichungstag der Anmeldung: 15.04.1998
(73) Patentinhaber: Dr.Ing.h.c. F. Porsche Aktiengesellschaft, 70435 Stuttgart (DE)
(72) Erfinder: Kluge, Andreas, 71272 Renningen (DE); Müller, Martin, 74354 Besigheim (DE)

(56) Entgegenhaltungen:
- EP-A- 0 643 232
- FR-A- 1 452 053
- US-A- 3 805 863

## Beschreibung

Die Erfindung bezieht sich auf eine Radschraube nach dem Oberbegriff des Anspruchs 1.

Aus der DE 23 62 837 B2 ist eine Bolzenverbindung zur Befestigung von Fahrzeugrädern auf Fahrzeugnaben bekannt. Der Bolzen ist mit einem Stützring versehen, der kegelstumpfförmig ausgebildet ist und auf dem Bolzen mittels eines Sicherungsringes gehalten wird.

Aufgabe der Erfindung ist es, eine Radschraube mit einem Stützring zu schaffen, der in einfacher Weise unverlierbar auf der Radschraube gehalten ist und eine definierte Befestigung des Fahrzeugrades an der Fahrzeugnabe gewährleistet.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß der Stützring aufgrund seiner balligen, kugelförmigen Ausbildung eine relativ große Stützfläche in der Aufnahme des Fahrzeugrades bildet. Desweiteren ist der Stützring über Verstemmungen mit der Radschraube so verbunden, daß dieser noch verdrehbar auf dem Schaft ist und somit wenig Reibung zwischen dem Stützring und dem Schraubenkopf beim Befestigen des Rades entsteht.

Der Stützring besteht aus einer Leichtmetallegierung und ist auf einer Radschraube aus Stahl angeordnet. Bei der Befestigung eines Magnesiumrades an der Fahrzeugnabe ist es somit vorteilig, wenn der Stützring aus einer Aluminiumlegierung besteht, da hierdurch zwischen dem Stützring und dem Magnesiumrad keine Kontaktkorission entstehen kann, was bei einem Stützring aus Stahl der Fall sein würde.

Die Verstemmungen am Stützring werden in vorteilhafter Weise verteilt am Umfang des Stützringes angeordnet. Diese Verstemmungen greifen in eine Ringnut des Schraubenschaftes derart ein, daß noch eine gute Drehbarkeit des Stützringes auf der Radschraube gewährleistet ist.

Ein Ausführungsbeispiel der Erfindung ist in der Zeichnung dargestellt und wird im folgenden näher beschrieben.

Es zeigen
- Fig. 1: eine vergrößerte Darstellung einer Radschraube mit Stützring im Schnitt,
- Fig. 2: eine Darstellung eines an einer Fahrzeugnabe befestigten Fahrzeugrades über die Radschraube mit Stützring und
- Fig. 3: eine vergrößerete Darstellung Z der Verstemmungen am Stützring.

Eine Radschraube 1 umfaßt einen Kopf 2 und einen Schaft 3 mit einem Gewindeabschnitt 4. Zwischen dem Kopf 2 und dem Gewindeabschnitt 4 ist ein Stützring 5 auf dem Schaft 3 der Schraube 1 angeordnet.

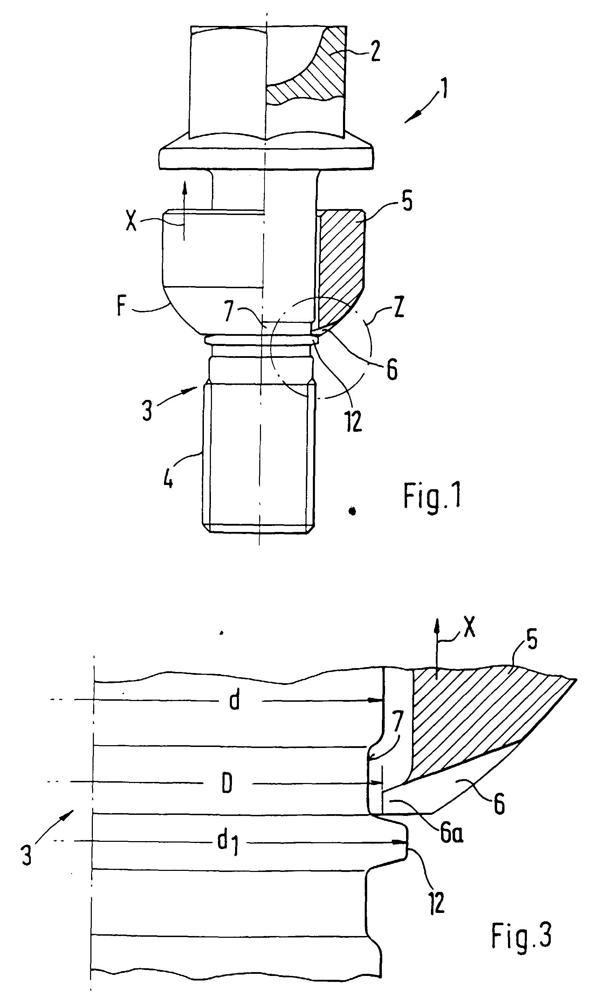

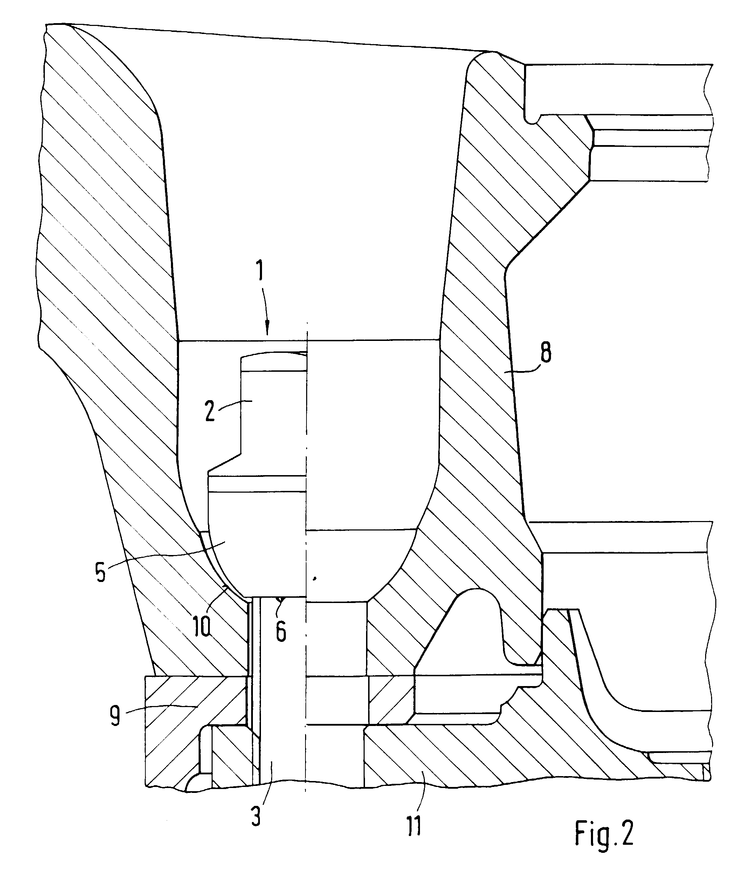

Der Stützring ist lose, d.h. mit Spiel drehbar auf dem Schaft 3 gehalten und über Verstemmungen 6, welche in eine Ringnut 7 des Schaftes 3 eingreifen, unverlierbar auf dem Schaft gehalten. Es sind vorzugsweise gleichmäßig verteilt, vier Verstemmungen 6 vorgesehen, deren Nasen 6a in die Ringnut 7 eingreifen. Die Verstemmungen 6 sind in Fig. 3 vergrößert dargestellt.

In Fig. 2 ist ein Teil eines Fahrzeugrades 8 gezeigt, welches unter Zwischenschaltung eines Bremsscheibentopfes 9 über die Radschraube 1 mit einer Fahrzeugnabe 11 verbunden ist.

Der Stützring 5 weist außenseitig eine kugelförmige Fläche F auf, wobei die Verstemmungen 6 am unteren Ende des Stützringes 5, d.h. im Grund des Anlagebereichs in der ebenfalls korrespondierend zum Stützring 5 kugelförmig ausgebildeten Aufnahme 10 vorgesehen sind.

Ein kegelstumpfförmig ausgebildeter Stützring kann ebenfalls über Verstemmungen 6 an der Radschraube 3 in einer Nut 7 festsetzbar sein.

Die Nasen 6a der Verstemmungen 6 am Stützring 5 sind, wie insbesondere Fig. 3 zeigt, mit einem Innendurchmesser D versehen, welche etwa dem Außendurchmesser d des Schaftes 3 entspricht. Hierdurch kann der Stützring 5 auf dem Schaft 3 beim Befestigen hochrutschen in Pfeilrichtung X, aber nicht vom Schaft 3 abfallen. Der Vorsprung 12 hält den Stützring 5 unverlierbar in seiner Lage.

## Patentansprüche

1. Radschraube für ein Fahrzeugrad mit einem Kopf zur Drehmomentaufbringung und einem Schaft, der am freien Ende einen Gewindeabschnitt aufweist und beider zwischen dem Kopf und dem Gewindeabschnitt ein drehbarer Stützring angeordnet ist, dadurch gekennzeichnet, daß der Stützring (5) im Anlagebereich des Fahrzeugrades (8) kugelförmig ausgebildet ist und am Schraubenschaft (3) in einer Ringnut (7) über mindestens eine Verstemmung (6) verdrehbar gehalten ist.

2. Radschraube nach Anspruch 1, dadurch gekennzeichnet, daß der Stützring (5) aus einer Aluminumlegierung besteht und auf einer aus Stahl bestehenden Radschraube (3) angeordnet ist.

3. Radschraube nach den Ansprüchen 1 oder 2, dadurch gekennzeichnet, daß die Verstemmungen (6) aus vier Nasen (6a) bestehen.

4. Radschraube nach Anspruch 3, dadurch gekennzeichnet, daß die Nasen (6a) der Verstemmungen (6) des Stützringes (5) einen Innendurchmesser (D) aufweisen, der etwa dem Außendurchmesser (d) des Schraubenschaftes (3) entspricht.

5. Radschrauben nach den Ansprüchen 1-4, dadurch gekennzeichnet, daß die Ringnut (7) einen vorspringenden, umlaufenden Rand (12) aufweist, dessen Außendurchmesser (d1) größer ist als der Innendurchmesser (d) des Schaftes (3).

## Claims

1. A bolt for a vehicle wheel, comprising a head for applying torque and a stem having a threaded portion at the free end, wherein a rotatable bearing ring is arranged between the head and the threaded portion, **characterized in that** the bearing ring (5) is spherical in the abutment region of the vehicle wheel (8) and is held rotatably in an annular groove (7) on the bolt stem (3) by way of at least one deformed portion (6).

2. A wheel bolt according to Claim 1, **characterized in that** the bearing ring (5) consists of an aluminium alloy and is arranged on a wheel bolt (3) consisting of steel.

3. A wheel bolt according to Claims 1 and 2, **characterized in that** the deformed portions (6) comprise four projections (6a).

4. A wheel bolt according to Claim 3, **characterized in that** the projections (6a) of the deformed portions (6) of the bearing ring (5) have an internal diameter (**D**) corresponding substantially to the external diameter (**d**) of the bolt stem (3).

5. A wheel bolt according to Claims 1 to 4, **characterized in that** the annular groove (7) has a projecting, continuous edge (12), the external diameter (**d1**) of which is greater than the external diameter (**d**) of the stem (3).

## Revendications

1. Vis pour roue de véhicule présentant une tête pour l'application d'un couple de rotation ainsi qu'une tige qui présente à son extrémité libre un segment fileté et dans laquelle une bague d'appui tournante est disposée entre la tête et le segment fileté, caractérisée en ce que la bague d'appui (5) présente une forme sphérique dans la zone d'application de la roue (8) du véhicule et est maintenue tournante sur la tige (3) de la vis dans une rainure annulaire (7), par au moins un matage (6).

2. Vis de roue selon la revendication 1, caractérisée en ce que la bague d'appui (5) est faite d'un alliage d'aluminium et est disposée sur une vis de roue (3) en acier.

3. Vis de roue selon les revendications 1 ou 2, caractérisée en ce que les matages (6) sont constitués de quatre ergots (6a).

4. Vis de roue selon la revendication 3, caractérisée en ce que les ergots (6a) et les matages (6) de la bague d'appui (5) présentent un diamètre intérieur (D) qui correspond à peu près au diamètre extérieur (d) de la tige (3) de la vis.

5. Vis de roue selon les revendications 1 à 4, caractérisée en ce que la rainure annulaire (7) présente un bord (12) périphérique et saillant dont le diamètre extérieur (d1) est supérieur au diamètre (d) de la tige (3).
